## Europäisches Patentamt
## European Patent Office
## Office européen des brevets

(19)

(11) Veröffentlichungsnummer: **0 239 871**
**B1**

(12) **EUROPÄISCHE PATENTSCHRIFT**

(45) Veröffentlichungstag der Patentschrift:
27.09.89

(51) Int. Cl.⁴: **G03B 42/02**

(21) Anmeldenummer: **87103915.2**

(22) Anmeldetag: **17.03.87**

(54) **Röntgenblattfilmkassettenent- und -beladegerät.**

(30) Priorität: **29.03.86 DE 3610659**

(43) Veröffentlichungstag der Anmeldung:
**07.10.87 Patentblatt 87/41**

(45) Bekanntmachung des Hinweises auf die Patenterteilung:
**27.09.89 Patentblatt 89/39**

(84) Benannte Vertragsstaaten:
**FR GB IT**

(56) Entgegenhaltungen:
**DE-A- 2 607 876**
**DE-C- 3 122 582**
**DE-C- 3 122 583**
**DE-C- 3 232 148**
**DE-C- 3 232 187**

(73) Patentinhaber: **Agfa-Gevaert AG,**
**D-5090 Leverkusen 1(DE)**

(72) Erfinder: **Müller, Jürgen, Dipl.-Ing., Bozzarisstrasse 7,**
**D-8000 München 90(DE)**

ACTORUM AG

**Beschreibung**

Die Erfindung betrifft ein Röntgenblattfilmkassettenent- und -beladegerät mit einem lichtdichten verschließbaren Schacht zur Aufnahme einer Kassette mit Mitteln zur Filmentnahme aus einer und zum Einführen eines neuen Films in eine eingegebene Kassette, mit Mitteln zum Bestimmen des Formats einer eingegebenen Kassette, mit mehreren Fächern für Blattfilmstapel verschiedener Formate enthaltende Dispensermagazine, mit einer Steuervorrichtung zum Ansteuern eines Dispensermagazine, dessen Filmformat dem Filmformat einer eingegebenen Kassette entspricht, und zum Entnehmen eines Blattfilms aus diesem Dispensermagazin und mit Transportmitteln zum Transportieren eines einem Dispensermagazin entnommenen Blattfilms zu der Kassette.

Geräte dieser Art sind in verschiedenen Varianten bekannt. Dabei werden die Dispensermagazine jeweils in ihrem Fach geöffnet und bei Bedarf das oberste Filmblatt mittels eines im Fach angeordneten Saugers abgehoben und an ein dem Fach zugeordnetes Transportwalzenpaar abgegeben. Dessen Transportebene liegt parallel zur Ebene des Blattfilmstapels im Dispensermagazin, so daß der Blattfilm anschließend umgelenkt werden muß. Gemäß der DE-PS 26 07 876 erfolgt diese Umlenkung durch je einen eigenen Kanal je Dispenserfach. Dies ist sehr aufwendig. Gemäß anderen bekannten Vorrichtungen, z.B. nach der DE-PS 32 32 148, wird diese Umlenkung durch entsprechend verzweigte Strecken von Transportwalzenpaaren bewirkt. Dabei stellt jede Umlenkstelle eine Gefahrenstelle dar, bei der dafür gesorgt werden muß, daß ein zu transportierender Blattfilm tatsächlich zwischen das nächste Transportwalzenpaar einläuft.

Der Erfindung liegt die Aufgabe zugrunde, ein Gerät der eingangs genannten Art so auszugestalten, daß unter Vermeidung mehrerer nebeneinanderliegender Kanäle die sich an die Dispensermagazine anschließende Blatttransportstrecke weniger richtungsändernde Blattübergabestellen aufweisen kann.

Diese Aufgabe wird erfindungsgemäß gelöst durch die Merkmale des Hauptanspruchs. Weitere vorteilhafte Merkmale der Erfindung sind den Unteransprüchen entnehmbar.

Durch das erfindungsgemäße Bewegen des jeweils benötigten Dispensermagazins in den Bereich der Blattfilmtransportstrecke ist es möglich geworden, einen zu entnehmenden Blattfilm unmittelbar durch den separierenden Sauger in den geradlinig verlaufenden Teil der Blattfilmtransportstrecke einzuführen. Außerdem ist es hierdurch möglich geworden, nur eine Saugeranordnung für die Entnahme von Blattfilmen aus den verschiedenen Dispensermagazinen vorzusehen und diese eine Saugeranordnung gegen den Stapel des jeweils bereitgestellten Dispensermagazins zu steuern.

Die Erfindung wird anhand von Zeichnungen näher erläutert. Es zeigen

Fig. 1 eine schematische, teilweise ab- und aufgebrochene Darstellung eines erfindungsgemäßen Gerätes mit Dispensermagazinen,

Fig. 2 einen Schnitt durch das Gerät nach Fig. 1 parallel zu einem Dispensermagazin beim Eingeben desselben,

Fig. 3 einen zum Schnitt nach Fig. 2 senkrechten Schnitt parallel zur Eingaberichtung des Dispensermagazins,

Fig. 4 einen Schnitt nach Fig. 2 beim Öffnen des Dispensermagazine.

Fig. 5 einen Schnitt nach Fig. 2 in der voll geöffneten Stellung des Dispensermagazins,

Fig. 6 einen Schnitt nach Fig. 3 in der Stellung des Dispensermagazins nach Fig. 5,

Fig. 7 einen Schnitt nach Fig. 2 während des Wiederschließens des Dispensermagazins.

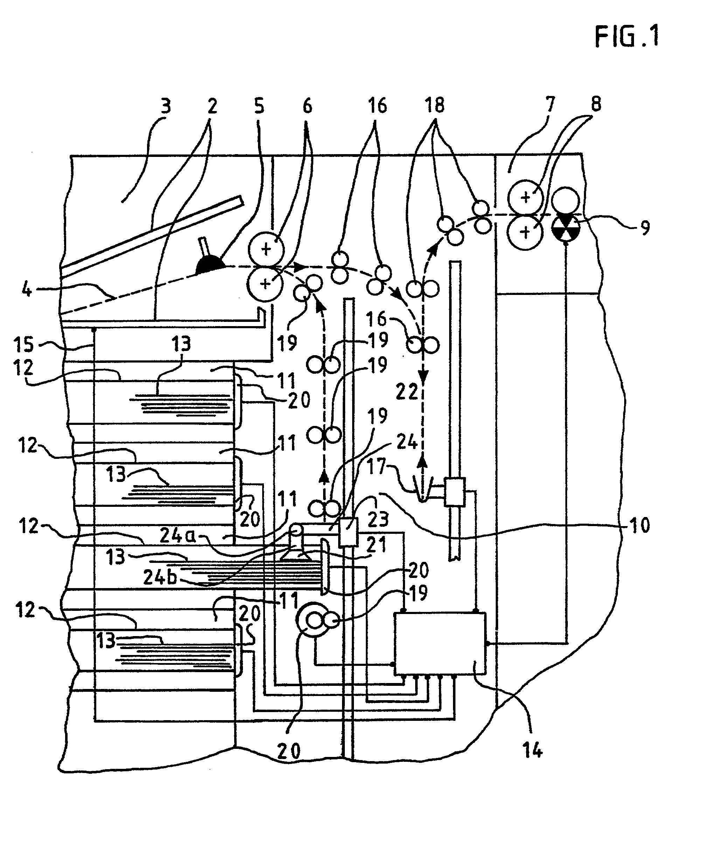

In Figur 1 sind das auf- und abgebrochene Gehäuse eines Blattfilmkassettenent- und -beladegerätes mit 1, ein lichtdicht verschließbarer Schacht zum Eingeben einer zu ent- und/oder zu beladenden Röntgenfilmkassette 2 mit 3, ein Sauger zum Entnehmen eines Blattfilms 4 aus der im Schacht 3 geöffneten Kassette 2 mit 5 und ein am Schachtende angeordnetes Transportrollenpaar zum Weitertransport des Blattfilms 4 mit 6 bezeichnet. Zwischen dem Kassettenschacht 3 und einer Entwicklungsvorrichtung 7 bzw. den zugehörigen Blattfilmtransportmitteln 8 und ggf. einer den Filmtransport kontrollierenden Lichtschranke 9 ist ein vertikaler Blattfilmtransportschacht 10 vorgesehen, in den auch Fächer 11 für Blattfilmvorrats- oder Dispensermagazine 12 münden. Diese Dispensermagazine 12 enthalten Blattfilmstapel 13 mit Blattfilmen der unterschiedlichen, in Kassetten 2 der unterschiedlichen Formate zu verwendenden Blattfilmgrößen oder -sorten. Mittels irgendeiner bekannten und daher nicht gezeigten Vorrichtung zur Ermittlung der Größe einer eingegebenen Kassette 2 wird das Format einer eingegebenen Kassette 2 bzw. die hierin zu verwendende Blattfilmsorte ermittelt und an einen Rechner bzw. eine Vergleichseinrichtung bzw. eine elektronische Steuervorrichtung weitergegeben, die schematisch dargestellt und mit 14 bezeichnet ist. Diese bekannte Formatermittlung ist schematisch nur durch die Leitung 15 angedeutet.

Vor dem Walzenpaar 6 sind im Transportschacht 10 drei Gruppen von Blatttransportstrecken bzw. zugehörigen Walzenpaaren vorgesehen. Eine gekrümmte Walzenstrecke 16 führt zu einem Auffanghaken oder -korb 17, der mit der Steuervorrichtung 14 verbunden ist und nach Ermittlung des Kassettenformats in eine Höhe gefahren wird, in der das Blatt 4, das von den Walzen 6, 16 angefördert wird, auffängt. Dabei bleibt das obere Ende des Blattes 4 noch zwischen einem der Walzenpaare 16, so daß es wieder nach oben und durch die Walzenstrecke 18 zu dem Walzenpaar 8 und in die nicht gezeigte Entwicklungsvorrichtung 7 transportiert werden kann, wenn die Lichtschranke 9 der Steuereinrichtung 14 einen freien Durchgang signalisiert.

Die dritte Transportwalzenstrecke 19, deren Antrieb 20 ebenfalls mit der Steuereinrichtung 14 verbunden ist, verläuft vertikal im Transportschacht 10 vor den Fächern 11 für die Dispensermagazine 12, wobei deren Walzen 19 immer zwischen zwei Magazinen 12 liegen, so daß letztere in den Bereich zwischen zwei Walzenpaaren 19 in den Transportschacht 10 transportiert werden können. Vor jedem Fach 12 ist eine Klemm- oder Greifvorrichtung 20 für die innen im Fach 12 liegende Stirnseite des jeweiligen Dispensermagazins 12 angeordnet, von denen jede mit der Steuervorrichtung 14 verbunden ist. Nach Ermittlung des Formats bzw. der zugehörigen Filmsorte einer in den Schacht 3 eingegebenen Kassette 2 und Entleerung derselben wird diejenige Klemm- oder Greifvorrichtung 20 von der Steuervorrichtung 14 angesteuert, die demjenigen Dispensermagazin 12 zugeordnet ist, das Blattfilme der entsprechenden Größe oder Sorte enthält. Gemäß dem Beispiel nach Figur 1 ist dies das zweitunterste Dispensermagazin 12. Dieses wird nun durch die zugeordnete Klemm- oder Greifvorrichtung 20 erfaßt und über in Figur 1 nicht gezeigte Antriebsmittel für die Klemm- oder Greifvorrichtung gemäß Figur 1 in eine voll geöffnete Stellung in den Transportschacht 10 gezogen. Dort wird dem geöffneten Dispensermagazin 12 das oberste Filmblatt durch hierfür geeignete Mittel entnommen und der Transportwalzenstrecke 19 zum Transport in die entleerte Kassette 2 zugeführt. Die Walzenstrecke 19 wird ebenfalls mittels Steuervorrichtung 14 rechtzeitig in Betrieb gesetzt. Nach der Blattentnahme wird mittels der Steuervorrichtung 14 das in den Transportschacht 10 gezogene Dispensermagazin 12 wieder in sein Fach 11 zurückgeführt.

Zum Entnehmen eines Filmblattes aus einem in die Bereitschaftstellung im Transportschacht 10 transportiertes Dispensermagazin 12 kann je Magazin ein Sauger oder Saugerpaar vorgesehen sein, das ebenfalls durch die Steuervorrichtung 14 in Tätigkeit gesetzt wird. Es ist aber gemäß Figur 1 statt dessen auch möglich, eine einzige Saugervorrichtung 21 schwenkbar und längs einer vertikalen Führung 22 über einen Motor mit Getriebe 23 verschiebbar auszubilden, die ebenfalls mittels der Steuervorrichtung 14 das jeweils in den Transportschacht 10 gefahrene Dispensermagazin 12 ansteuert. Nach Aufsetzen der Saugervorrichtung 21 auf das oberste Blatt des entsprechenden Stapels 13 wird die Saugervorrichtung 21 in Betrieb gesetzt, hebt das Blatt an, schwenkt um etwa 90° und fährt die Blattvorderkante dem über und/oder vor dem offenen Dispensermagazin 12 liegenden Walzenpaar 19 zu. Von diesem wird das der Kassette 2 zuzuführende Blatt erfaßt und in die Transportstrecke 19 eingegeben und schließlich in die zuvor entleerte Kassette 2 eingeführt. Da hierbei die gewöhnlich aus mindestens zwei Saugern bestehende Saugervorrichtung 21 nicht mit den Walzen 19 bzw. der Klemm- oder Greifvorrichtung 20 und den Oberkanten der Dispensermagazine 12 kollidieren darf, ist es zweckmäßig, daß die Sauger 21 an seitlich der Dispensermagazine 12 geführten Armen 24, die zu den Blattstapeln 13 hin nach innen und unten abgewinkelte Teile 24a, 24b aufweisen, gelagert sind.

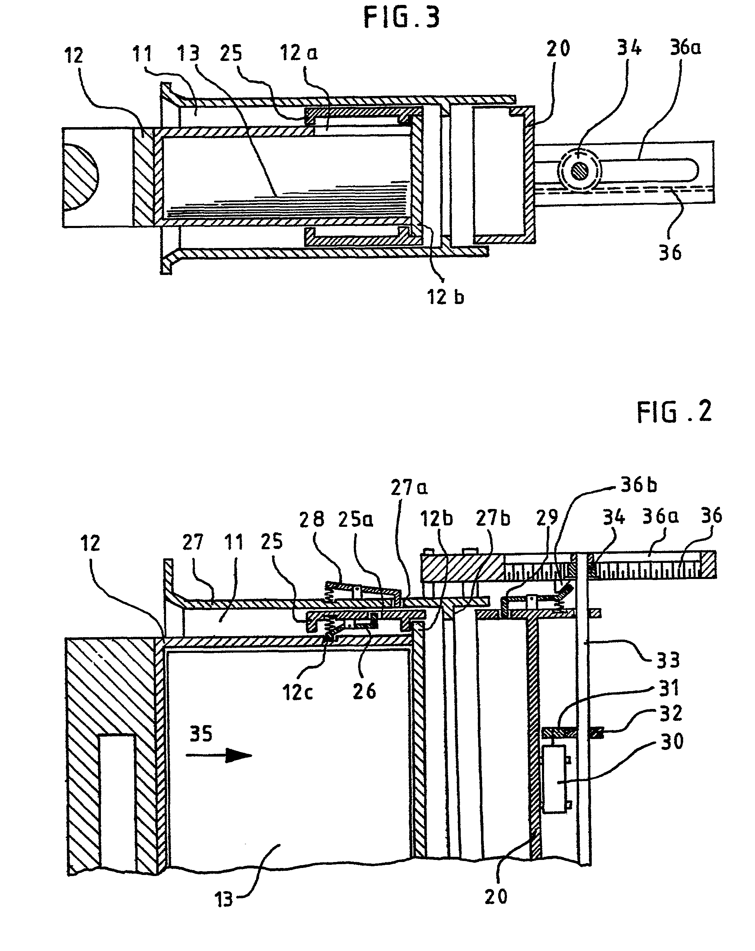

In den Figuren 2 bis 7 sind nun eine mögliche mechanische Ausgestaltung der Dispensermagazine 12 und der Klemm- oder Greifvorrichtung 20 sowie deren Zusammenwirken in einem einzelnen Dispensermagazin gezeigt und werden nachfolgend näher erläutert. Dabei wird ausgegangen von einem bekannten Dispensermagazin, das durch einen Griff aufweisenden Behälter 12 gebildet wird. An der Oberfläche weist der Behälter 12, seiner Stirnseite benachbart, eine Öffnung 12a auf, die groß genug ist, daß Blattfilmstapel 13 eingeführt werden und einzelne Blattfilme entnommen werden können. Die Stirnseite des Behälters 12 weist einen vorstehenden Rand 12b auf. Die Öffnung 12a ist durch einen Schieberdeckel 25 verschließbar und freigebbar. Der Schieberdeckel 25 ist vorzugsweise rohrförmig ausgestaltet und bildet in der geschlossenen Stellung des Magazins 12, 25 mit dem Rand 12b eine Lichtabdichtung und einen Anschlag. In der geschlossenen Stellung des Magazins 12, 25 greift (vorzugsweise an jeder Schmal-Längsseite) eine am Deckel 25 gelagerte, zweiarmige, gefederte Raste 26 mit einem Arm in eine Rastkerbe 12c des Behälters 12, als auch mit dem anderen Arm in einen Durchbruch 25a des Schieberdeckels 25. Die entsprechende Fachwand 27 eines jeden Faches 11 weist ebenfalls einen Durchbruch 27a auf, der in einer Stellung des Magazins 12, 25, in der es geöffnet werden soll, mit dem Durchbruch 25a fluchtet. Durch den Durchbruch 27a ragt eine federnde Klinke 28, die stark genug ist, um beim Eindringen in den Durchbruch 25a die Raste 26 entgegen ihrer Federwirkung zu verschwenken und so den Schieberdeckel 25 vom Behälter 12 zu entriegeln. Dabei trifft der Schieberdeckel 25 dann unter Lichtabdichtung auf einen fachseitigen Anschlag 27b und wird daran gehalten.

Bei der weiteren Einsetzbewegung des Magazins 12, 25 wird der Behälter 12 allein weitergeschoben, bis sein vorstehender Rand 12b mit mindestens einer, vorzugsweise ebenfalls zweiarmigen, gefederten Klinke 29 der haubenartig die Stirnseite und den Rand 12b übergreifenden Klemm- oder Greifvorrichtung 20 verrastet. Mit jeder Klemmvorrichtung 20 ist ein Elektromotor 30 gekuppelt. Im vorliegenden Beispiel kämmt sein Ritzel 31 mit einem Zahnrad 32. Dieses ist auf einer zur Behälterstirnseite parallelen Stange 33 befestigt. An deren beiden Enden sind je ein Zahnrad 34 befestigt, das je mit einer zur Magazineinschubrichtung 35 parallelen, gehäusefesten Zahnstange 36 kämmt. Die Stange 33 ist an ihren Enden in je einem gehäusefesten Schlitz 36a geführt, der parallel zu den Zahnstangen 36 verläuft.

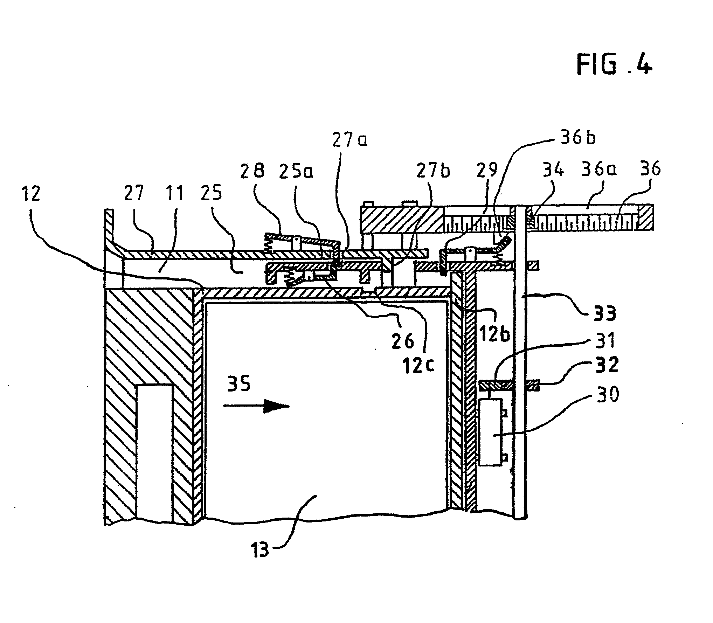

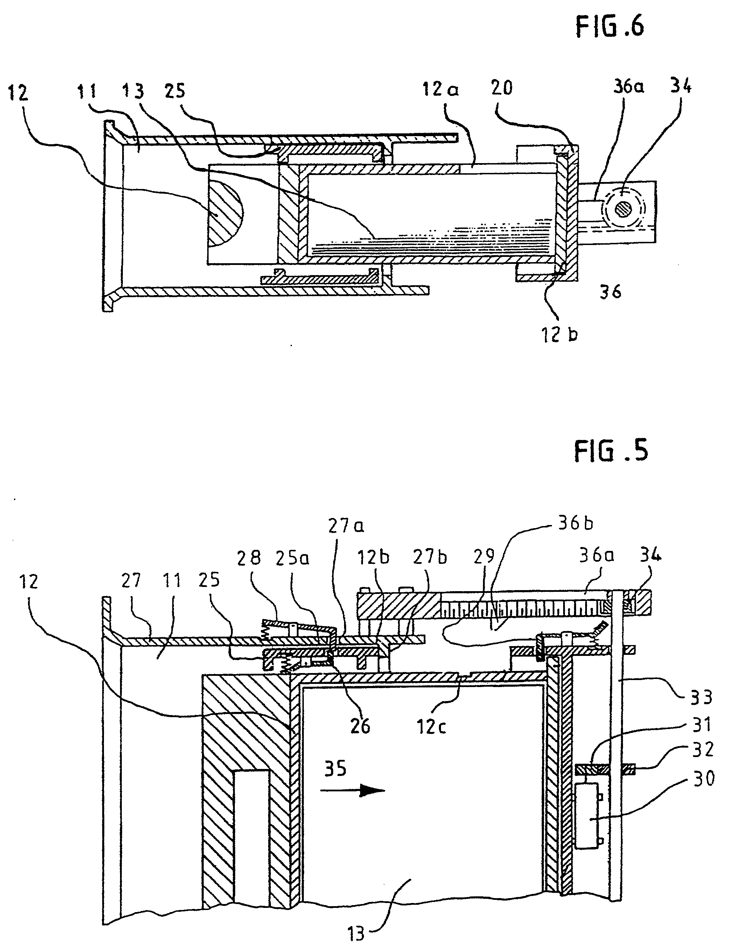

Wird über die Steuervorrichtung 14 das entsprechende Magazinfach 11 bzw. dessen Klemmvorrichtung 20 bei bis in die Stellung nach Figur 4 eingesetztem Magazin 12, 25 angesteuert, so werden vom Motor 30 die Zahnräder 31, 32, 34 so angetrieben, daß die Klemmvorrichtung 20 samt Behälter 12 in die Bereitschaftstellung zum Entnehmen eines Filmblattes entsprechend dem vorletzten Magazin nach Figur 1 in den Transportschacht 10 herausgefahren wird. Diese Stellung ist in den Figuren 5 und 6 gezeigt. Nach Entnahme eines Filmblattes gemäß Figur 1 wird über die Steuervorrichtung 14 der Motor 30 in umgekehrter Richtung betätigt und transportiert den Behälter 12 entgegen der Magazineinschubrichtung 35 bis in die Stellung nach Figur 4.

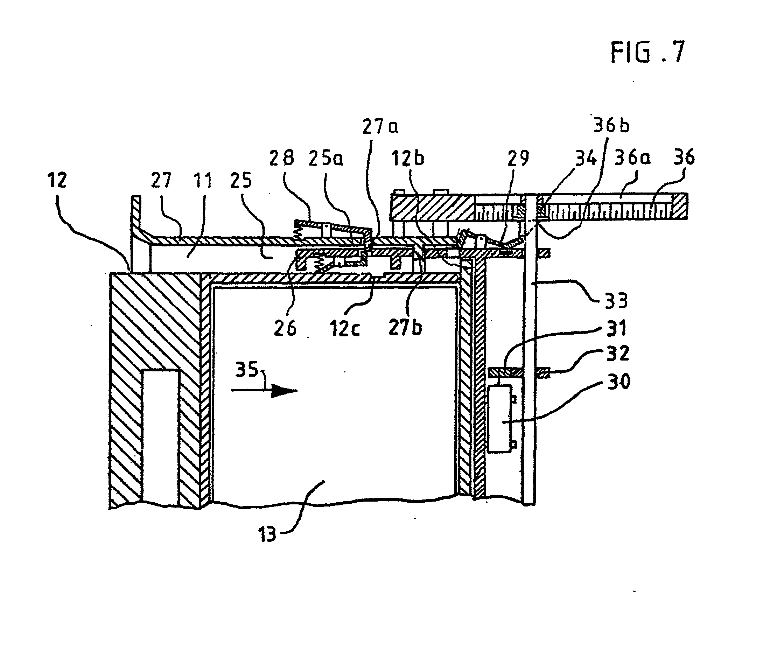

Soll ein Magazin ausgewechselt werden, so wird der Behälter 12 entweder von Hand oder durch eine besondere, z.B. durch Taste betätigbare Motorfunktion, in die Stellung nach den Figuren 7 bzw. 2 entgegen der Einschubrichtung 35 bewegt, so daß die Klinke 29 an einer gehäusefesten Schrägfläche 36b vom Behälterrand 12b abgekoppelt wird. Gleichzeitig wird, z.B. über einen Magnetschalter, die Klinke 28 angehoben, so daß sie nicht mehr in den Durchbruch 25a eingreift. Nun wird das Magazin 12 von Hand aus dem Fach 11 gezogen, wobei schließlich der Rand 12b am Schieberdeckel 25 lichtdicht anschlägt und die Klinke 26 des Deckels 25 wieder mit der Ausnehmung 12c verrastet und das Magazin 12, 25 verriegelt.

Der Einfachheit halber ist nur ein Beispiel nach der Erfindung in den Figuren gezeigt. Es wäre aber beispielsweise auch möglich, daß die Motoren 30 gehäusefest gelagert sind und über ein Ritzel eine mit der Klemm- oder Greifvorrichtung 20 verbundene Zahnstange antreiben. Auch die Ver- und Entriegelung der Klinken 26 bzw. 28 bzw. 29 kann auf jede andere hierfür bekannte Weise erfolgen.

## Patentansprüche

1. Röntgenblattfilmkassettenent- und -beladegerät mit einem lichtdichten verschließbaren Schacht zur Aufnahme einer Kassette mit Mitteln zur Filmentnahme aus einer und zum Einführen eines neuen Films in eine eingegebene Kassette, mit Mitteln zum Bestimmen des Formats einer eingegebenen Kassette, mit mehreren Fächern für Blattfilmstapel verschiedener Formate enthaltende Dispensermagazine, mit einer Steuervorrichtung zum Ansteuern eines Dispensermagazins, dessen Filmformat dem Filmformat einer eingegebenen Kassette entspricht, und zum Entnehmen eines Blattfilms aus diesem Dispensermagazin und mit Transportmitteln zum Transportieren eines einem Dispensermagazin entnommenen Blattfilms zu der Kassette, dadurch gekennzeichnet, daß an jedem Fach (11) Antriebsmittel (20, 30, 34, 36) zum Bewegen des darin angeordneten, geöffneten Dispensermagazins (12) aus dem Fach (11) in den Bereich (10) der Blattfilmtransportmittel und zurück in das Fach (11) angeordnet sind und daß jeweils nur die Antriebsmittel (20) des einer eingegebenen Kassette (2) formatmäßig entsprechenden Dispensermagazins (12) durch die Steuervorrichtung (14) betätigbar sind.

2. Gerät nach Anspruch 1, dadurch gekennzeichnet, daß wenigstens ein Sauger (21) oder Saugerpaar durch die Steuervorrichtung (14) auf den obersten Blattfilm eines durch die Antriebsmittel (20) aus dem Fach (11) transportierten Dispensermagazins (12) absenkbar ist.

3. Gerät nach Anspruch 2, dadurch gekennzeichnet, daß jedem Dispensermagazin wenigstens ein eigener Sauger zugeordnet ist.

4. Gerät nach Anspruch 2, dadurch gekennzeichnet, daß allen Dispensermagazinen (12) wenigstens ein gemeinsamer, durch die Steuervorrichtung (14) auf die jeweilige Dispensermagazinhöhe einstellbarer Sauger (21) zugeordnet ist.

5. Gerät nach Anspruch 4, dadurch gekennzeichnet, daß der oder die Sauger (21) seitlich von oben in das jeweilige Dispensermagazin (12) eingreifen.

6. Gerät nach einem der Ansprüche 2 bis 5, dadurch gekennzeichnet, daß über dem aus einem Fach (11) gezogenen Dispensermagazin (12) und jeweils höhenmäßig unter dem darüber angeordneten Dispensermagazin ein Transportwalzenpaar (19) zur Übernahme eines vom Sauger (21) angehobenen Blattfilms und zum Weitertransport zu der Kassette (2) angeordnet ist.

7. Gerät nach Anspruch 6, dadurch gekennzeichnet, daß die den verschiedenen Dispensermagazinen (12) zugeordneten Transportwalzenpaare (19) zusammen eine Blattfilmtransportstrecke bilden.

8. Gerät für Dispensermagazine, die aus einem zur Blattfilmentnahme oben teilweise offenen Behälter bestehen, dessen Öffnung durch einen verrastbaren, vorzugsweise rohrförmigen Schiebedeckel lichtdicht verschließbar ist, wobei der Schiebedeckel beim lichtdichten Einsetzen eines Dispensermagazins in ein Fach automatisch entriegelbar und der Behälter zur Freilegung der Öffnung gegenüber dem Schiebedeckel in das Fach- bzw. Geräteinnere verschiebbar ist, nach einem der vorhergehenden Ansprüche, dadurch gekennzeichnet, daß als Antriebsmittel stirnseitig in oder vor jedem Fach (11) eine Greif- oder Klemmvorrichtung (20) für den Behälter (12) in Einschubrichtung (35) des Dispensermagazins (12) verschiebbar gelagert ist und daß die Greif- oder Klemmvorrichtung (20) in Richtung auf die Blattfilmtransportmittel (19) mittels eines durch die Steuervorrichtung (14) schaltbaren Elektromotors (30) und Getriebeteile (31, 32, 33, 34, 36) hin- und herbewegbar ist.

9. Gerät nach Anspruch 8, dadurch gekennzeichnet, daß der Elektromotor (30) und ein hiermit gekoppeltes Zahnrad (31) an der Greif- oder Klemmvorrichtung (20) befestigt sind und daß dieses oder ein weiteres Zahnrad (34) mit einem an einer Fachwand (27) befestigten Zahnstange (36) in Eingriff steht.

10. Gerät nach Anspruch 9, dadurch gekennzeichnet, daß an beiden Längsseiten des Faches (11) je eine Zahnstange (36) in das Geräteinnere (10) vorstehend angebracht ist, mit denen je ein mit dem Elektromotor (30) gekoppeltes Zahnrad (34) kämmt.

11. Gerät nach einem der Ansprüche 8 bis 10, dadurch gekennzeichnet, daß die in Einschubrichtung (35) stirnseitige Behälterwand einen vorstehenden Rand (12b) aufweist, der mit einem Bund des Schiebedeckels (25) einen Anschlag für die geschlossene Stellung des Dispensermagazins (12, 25) bildet und mit dem in teilweise geöffneter Stellung des Dispensermagazins (12) mindestens ein Greifarm (29) der Greif- oder Klemmvorrichtung (20) in Eingriff bringbar ist.

12. Gerät nach Anspruch 11, dadurch gekennzeichnet, daß der Greifarm (29) durch eine an der Greif- oder Klemmvorrichtung (20) federnd gelagerte Klinke gebildet wird, die bei einer Einschubbewegung eines Dispensermagazins mit dem Rand (12b) des Behälters (12) federnd verrastbar ist und bei einer Entnahmebewegung des Dispensermagazins (12) an einer gehäusefesten Auflauffläche (36b) aus ihrer Raststellung herausbewegbar ist.

## Claims

1. Unloading and loading apparatus for X-ray sheet film cassettes having a light-excluding closable cavity for receiving a cassette having means to remove the film from a cassette and to thread a new film in an inserted cassette, having means to determine the size of an inserted cassette, having dispensing magazines containing several compartments for sheet film stacks of different sizes, having a control device for guiding a dispensing magazine, the film size of which corresponds to the film size of an inserted cassette, and to remove a sheet film from this dispensing magazine and having transporting means to transport one sheet film taken from a dispensing magazine to the cassette, characterised in that drive means (20, 30, 34, 36) are arranged at each compartment (11) to move the open dispensing magazine (12) arranged therein from the compartment (11) to the region (10) of the sheet film transporting means and back to the compartment (11), and in that only the drive means (20) of the dispensing magazine (12) corresponding in size to an inserted cassette (2) can be actuated in each case by the control device (14).

2. Apparatus according to claim 1, characterised in that at least one suction device (21) or pair of suction devices can be lowered by the control device (14) onto the uppermost sheet film of a dispensing magazine (12) transported by the drive means (20) from the compartment (11).

3. Apparatus according to claim 2, characterised in that at least one individual suction device is assigned to each dispensing magazine.

4. Apparatus according to claim 2, characterised in that at least one common suction device (21) which can be adjusted to the appropriate dispensing magazine height by means of the control device (14) is assigned to all dispensing magazines (12).

5. Apparatus according to claim 4, characterised in that the suction device or devices (21) engage laterally from above into the appropriate dispensing magazine (12).

6. Apparatus according to one of claims 2 to 5, characterised in that a pair of transporting rollers (19) is arranged above the dispensing magazine (12) pulled from a compartment (11) and in each case, in terms of height, below the dispensing magazine arranged above it, to transfer a sheet film raised by the suction device (21) and to convey it to the cassette (2).

7. Apparatus according to claim 6, characterised in that the pairs of transport rollers (19) assigned to the different dispensing magazines (12) together form a sheet film transport path.

8. Apparatus for dispensing magazines comprising a container partially open at the top to remove sheet film, the opening of this container can be closed in a light-excluding manner by means of a lockable, preferably tubular sliding cover, wherein the sliding cover can be unlocked automatically when a dispensing magazine is inserted into a compartment in a light-excluding manner and wherein the container can be moved into the interior of the compartment or apparatus to expose the opening opposite the sliding cover, according to one of the preceding claims, characterised in that a gripping or clamping device (20) for the container (12) is movably mounted in the insertion direction (35) of the dispensing magazine (12) as drive means on the end face side in or in front of each compartment (11), and in that the gripping or clamping device (20) can be moved back and forth in the direction of the sheet film transport means (19) by means of an electric motor (30) which can be operated using the control device (14) and gear parts (31, 32, 33, 34, 36).

9. Apparatus according to claim 8, characterised in that the electric motor (30) and a toothed wheel (31) coupled therewith are attached to the gripping or clamping device (20), and in that this or a further toothed wheel (34) engages a toothed rod (36) attached to a compartment wall (27).

10. Apparatus according to claim 9, characterised in that a toothed rod (36) is attached to each of two longitudinal sides of the compartment (11) projecting into the interior of the apparatus (10), each toothed rod (36) meshing with a toothed wheel (34) coupled to the electric motor (30).

11. Apparatus according to one of claims 8 to 10, characterised in that the container wall on the end face side in the direction of insertion (35) has a projecting edge (12b) which forms a stop for the closed position of the dispensing magazine (12, 25) with a shoulder of the sliding cover (25) and which can be engaged with at least one gripping arm (29) of the gripping or clamping device (20) in the partially opened position of the dispensing magazine (12).

12. Apparatus according to claim 11, characterised in that the gripping arm (29) is formed by a pawl resiliently mounted on the gripping or clamping device (20), which pawl can be resiliently locked by the edge (12b) of the container (12) during an insertion movement of a dispensing magazine and can be moved out of its notch position during a removal movement of the dispensing magazine (12) at a contact surface (36b) fixed to the housing.

## Revendications

1. Appareil de chargement et de déchargement de cassettes de films radiographiques en feuilles, comportant un logement pouvant être fermé, étanche à la lumière, destiné à recevoir une cassette, des moyens pour prélever un film d'une cassette introduite et y mettre en place un film nouveau, des moyens pour déterminer le format d'une cassette introduite, plusieurs compartiments pour des magasins distributeurs contenant des piles de films en feuilles de différents formats, un dispositif de commande pour actionner un magasin distributeur dont le format de film correspond au format de film d'une cassette introduite et pour prélever un film en feuille de ce magasin distributeur, et des moyens de transport pour acheminer à la cassette un film en feuille prélevé dans un magasin distributeur, caractérisé en ce que des organes de commande (20, 30, 34, 36) sont adjoints à chaque compartiment (11) pour faire sortir le magasin distributeur ouvert (12) qui y est placé dans la zone (10) des moyens de transport du film en feuille et pour le faire revenir dans le compartiment (11) et en ce que, dans chaque cas, seuls les organes de commande (20) du magasin distributeur (12) correspondant en format à celui d'une cassette introduite (2) sont actionnés par le dispositif de commande (14).

2. Appareil selon la revendication 1, caractérisé en ce qu'au moins un extracteur (21) ou un couple d'extracteurs actionnés par le dispositif de commande (14) peuvent se déplacer vers le bas sur le film en feuille supérieur d'un magasin distributeur (12) sorti du compartiment (11) par les organes de commande (20).

3. Appareil selon la revendication 2, caractérisé en ce qu'au moins un extracteur est affecté en propre à chaque magasin distributeur.

4. Appareil selon la revendication 2, caractérisé en ce qu'au moins un extracteur (21) commun, ajustable par le dispositif de commande (14) à chaque hauteur de magasin distributeur, est affecté à tous les magasins distributeurs (12).

5. Appareil selon la revendication 4, caractérisé en ce que le ou les extracteurs (21) pénètrent latéralement par le haut dans le magasin distributeur (12) concerné.

6. Appareil selon l'une des revendications 2 à 5, caractérisé en ce qu'un couple de rouleaux transporteurs (19) est placé au-dessus du magasin distributeur (12) tiré d'un compartiment (11) et, quant à la hauteur, au-dessous du magasin distributeur placé respectivement au-dessus, afin de recevoir un film en feuille soulevé par l'extracteur (21) et de le transporter jusque dans la cassette (2).

7. Appareil selon la revendication 6, caractérisé en ce que les couples de rouleaux transporteurs (19) affectés aux différents magasins distributeurs (12) constituent ensemble une voie de transport pour le film en feuille.

8. Appareil pour des magasins distributeurs, qui sont constitués d'un conteneur ouvert partiellement sur le dessus pour le prélèvement d'un film en feuille, dont l'ouverture peut être obturée de manière étanche à la lumière par une glissière encliquetable, avantageusement tubulaire, celle-ci étant automatiquement déverrouillée lors de la mise en place étanche à la lumière d'un magasin distributeur dans un compartiment et le conteneur pouvant coulisser à l'intérieur du compartiment et de l'appareil pour libérer l'ouverture par rapport à la glissière, appareil selon l'une des revendications précédentes, caractérisé en ce que l'organe de commande logé frontalement dans ou devant chaque compartiment (11) est un dispositif de prise ou de serrage (20) du conteneur (12) mobile dans la direction d'introduction (35) du magasin distributeur (12) et en ce que le dispositif de prise ou de serrage (20) peut effectuer un mouvement de va-et-vient dans la direction des moyens de transport (19) du film en feuille au moyen d'un moteur électrique (30) commutable par le dispositif de commande (14) et de pièces de manœuvre (31, 32, 33, 34, 36).

9. Appareil selon la revendication 8, caractérisé en ce que le moteur électrique (30) et une roue dentée (31), qui lui est couplée, sont fixés au dispositif de prise ou de serrage (20) et en ce que cette roue ou une autre roue dentée (34) est en prise avec une crémaillère (36) fixée à une paroi de compartiment (27).

10. Appareil selon la revendication 9, caractérisé en ce qu'une crémaillère (36) faisant saillie à l'intérieur (10) de l'appareil est disposée respectivement sur les deux côtés longitudinaux du compartiment (11), une roue dentée (34), couplée au moteur électrique (30), étant en prise avec chaque crémaillère.

11. Appareil selon l'une des revendications 8 à 10, caractérisé en ce que la paroi du conteneur, qui est frontale dans la direction d'introduction (35), présente un bord saillant (12b) qui constitue, avec un collet de la glissière (25), une butée pour la position fermée du magasin distributeur (12, 25) et avec lequel au moins un bras preneur (29) du dispositif de prise ou de serrage (20) vient en prise en position d'ouverture partielle du magasin distributeur (12).

12. Appareil selon la revendication 11, caractérisé en ce que le bras preneur (29) est formé d'un cliquet à ressort qui est monté sur le dispositif de prise ou de serrage (20), qui est encliquetable sur le bord (12b) du conteneur (12) lors d'un mouvement d'introduction d'un magasin distributeur et qui est chassé de sa position d'encliquetage, lors du mouvement de prélèvement du magasin distributeur (12), par une surface inclinée fixe (36b) du bâti.

FIG.1

# FIG.3

12  11  13  25  12 a  20  34  36a

12 b

# FIG.2

12  27  11  25  28  25a  27a  12b  27b  29  34  36a  36  36b

12c  26

35

13

33  31  32  30

20

FIG .4

FIG.6

FIG.5

FIG .7